# NEUE EUROPÄISCHE PATENTSCHRIFT

(11) **EP 3 592 458 B2**
(45) Veröffentlichungstag und Bekanntmachung des Hinweises auf die Entscheidung über den Einspruch: **04.03.2026**
(45) Hinweis auf die Patenterteilung: 21.06.2023
(21) Anmeldenummer: 18711847.6
(22) Anmeldetag: 06.03.2018
(51) Int. Cl.: B01J 23/656, B01J 35/04, B01J 37/02, B01J 29/08, B01J 29/40, B01J 29/70, B01J 35/02, B01J 35/10

(54) **MANGAN-HALTIGER DIESELOXIDATIONSKATALYSATOR**
MANGANESE-CONTAINING DIESEL OXIDATION CATALYST
CATALYSEUR DIESEL À OXYDATION CONTENANT DU MANGANÈSE

(30) Priorität: 06.03.2017 EP 17159286
(43) Veröffentlichungstag der Anmeldung: 15.01.2020
(73) Patentinhaber: Umicore AG & Co. KG, 63457 Hanau-Wolfgang (DE)
(72) Erfinder: HENGST, Christoph, 35510 Butzbach (DE); KATO, Naohiro, Hyogo, 650-0046 (JP)
(74) Vertreter: Lischka, Kerstin
(86) Internationale Anmeldenummer: PCT/EP2018/055388
(87) Internationale Veröffentlichungsnummer: WO 2018/162434

(56) Entgegenhaltungen:
- WO-A1-2013/082367
- WO-A1-2015/110819
- WO-A1-2016/038074
- WO-A1-2017/134065
- US-A- 5 100 632
- US-A- 5 260 248
- US-A- 5 643 542
- US-A1- 2010 152 032
- US-A1- 2015 165 422
- US-A1- 2015 165 422
- US-A1- 2015 165 423
- US-A1- 2015 165 423
- US-A1- 2015 165 423
- WEIWEI ZHAO ET AL: "Iron, lanthanum and manganese oxides loaded on [gamma]-Al 2O 3 for selective catalytic reduction of NO with NH 3 at low temperature", ENVIRONMENTAL TECHNOLOGY, 1 January 2013 (2013-01-01), Abingdon, pages 81 - 90, XP055403804, Retrieved from the Internet <URL:http://www.tandfonline.com/doi/pdf/10.1080/09593330.2012.680920?needAccess=true> DOI: 10.1080/09593330.2012.680920
- S.A. YASHNIK ET AL: "High-Performance Mn-Al-O Catalyst on Reticulated Foam Materials for Environmentally Friendly Catalytic Combustion", EURASIAN CHEMICO-TECHNOLOGICAL JOURNAL, vol. 17, no. 2, 1 January 2015 (2015-01-01), pages 145 - 158, XP055404636, ISSN: 1562-3920, DOI: 10.18321/ectj205

## Beschreibung

Die vorliegende Erfindung betrifft einen Mangan-haltigen Oxidationskatalysator zur Reinigung der Abgase von Dieselmotoren.

Das Rohabgas von Dieselmotoren enthält neben Kohlenmonoxid CO, Kohlenwasserstoffen HC und Stickoxiden NOₓ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder herrühren.

Während zur Entfernung der Partikelemissionen Dieselpartikelfilter mit und ohne katalytisch aktive Beschichtung geeignet sind und Stickoxide beispielsweise durch selektive katalytische Reduktion (Selective Catalytic Reduction SCR) an einem sogenannten SCR-Katalysator zu Stickstoff umgesetzt werden können, werden Kohlenmonoxid und Kohlenwasserstoffe durch Oxidation an einem geeigneten Oxidationskatalysator unschädlich gemacht. Daneben haben Oxidationskatalysatoren oft die Aufgabe, für einen abströmseitigen SCR-Katalysator ein optimales Verhältnis von NO zu NOz einzustellen.

Oxidationskatalysatoren sind in der Literatur umfangreich beschrieben. Es handelt sich dabei beispielsweise um sogenannte Durchflusssubstrate aus Keramik oder Metall, die als wesentliche katalytisch aktive Bestandteile Edelmetalle, wie Platin und Palladium, auf hochoberflächigen, porösen, hochschmelzenden Oxiden, beispielsweise Aluminiumoxid, tragen.

Die EP2000639A1 beschreibt Oxidationskatalysatoren, die neben Platin ein Oxid eines Metalls enthalten, das ausgewählt ist aus Magnesium, Erdalkalimetall und Alkalimetall. Der Katalysator hat die Funktion, die Abgastemperatur bei einer Kraftstoffeinspritzung zu erhöhen.

Auch wenn moderne Dieselkraftstoffe einen geringen Schwefelgehalt aufweisen, so muss doch Vorsorge getroffen werden, damit Dieseloxidationskatalysatoren eine hohe Unempfindlichkeit gegenüber Schwefelverbindungen über die gesamte Lebenszeit aufweisen.

Aus der WO2014/080220 ist die Verwendung von Manganoxid (MnOz) zur Kontrolle der Schwefel-Emissionen bekannt. Dabei werden Manganoxid und Edelmetall in einer Beschichtung auf ein Filtersubstrat aufgebracht.

Manganverbindungen, insbesondere Manganoxid, als Bestandteile von Katalysatoren für die Autoabgaskatalyse zu verwenden, ist auch bereits aus DE102011109200A1 bekannt.

Die DE102012204524A1 beschreibt LNT-Katalysatoren, die Mangan-haltige Mischoxide, zum Beispiel MnOₓ-CeO₂ enthalten. Auch die US2013/336865 beschreibt NOₓ-Absorber-Katalysatoren die Mangan enthalten können.

Die WO2015/095056 A1 und WO2015/095058 A1 beschreiben aus mehreren katalytisch aktiven Schichten aufgebaute Katalysatoren, wobei eine dieser Schichten ein Mangan-haltiges Trägeroxid für eine Platin- und optional eine Palladium-Komponente enthält. Neben der Oxidation von Kohlenwasserstoff und Kohlenmonoxid sind die Katalysator auch in der Lage Stickstoffmonoxid zu Stickstoffdioxid zu oxidieren.

Die vorliegende Erfindung betrifft einen Dieseloxidationskatalysator, der einen Tragkörper mit einer Länge L, die sich zwischen einer ersten Stirnfläche a und einer zweiten Stirnfläche b erstreckt und eine auf dem Tragkörper angeordnete katalytisch aktive Materialzone A umfasst, wobei die Materialzone A Palladium und Platin geträgert auf einem Mangan-haltigen Trägeroxid enthält, wobei das Verhältnis von Platin zu Palladium Pt : Pd ≥ 1 ist, und wobei das Mangan-haltige Trägeroxid aus einer Trägeroxidkomponente A und einer Trägeroxidkomponente B besteht und die Trägeroxidkomponente B aus Mangan und/oder einer Manganverbindung besteht und in einer Menge von 5 bis 15 Gew.-%, berechnet als MnO₂ und bezogen auf das Gesamtgewicht des Mangan-haltigen Trägeroxids vorliegt und wobei Materialzone A frei von Zeolithen ist, und wobei die Trägeroxidkomponente A Lanthan-dotiertes Aluminiumoxid ist, wobei Lanthan in Mengen von 1 bis 10 Gew.-%, berechnet als La₂O₃ und bezogen auf das Gewicht des dotierten Aluminiumoxids, verwendet wird, und wobei der Dieseloxidationskatalysator eine Materialzone B umfasst, dadurch gekennzeichnet, dass Materialzone B direkt auf dem Tragkörper und Materialzone A auf Materialzone B liegt, und dass Materialzone B Platin und Palladium auf einem Trägeroxid ausgewählt aus der Reihe bestehend aus Aluminiumoxid, dotiertes Aluminiumoxid, Siliziumoxid, Titandioxid und Mischoxiden enthaltend eines oder mehrere der genannten Oxide.

Als Trägeroxidkomponente A wird Lanthan-dotiertes Aluminiumoxid eingesetzt, wobei Lanthan in Mengen von 1 bis 10 Gew.-%, bevorzugt 3 bis 6 Gew.-%, jeweils berechnet als La₂O₃ und bezogen auf das Gewicht des dotierten Aluminiumoxides, verwendet wird.

Die Trägeroxidkomponente A liegt in einer Menge von 85 bis 95 Gew.-%, berechnet als Oxid und bezogen auf das Gesamtgewicht des Mangan-haltigen Trägeroxids vor.

Der Anteil an Trägeroxidkomponente B am Mangan-haltigen Trägeroxid beträgt erfindungsgemäß 5 bis 15 Gew.-% Mangan und/oder Manganverbindung, berechnet als MnOz und bezogen auf das Gesamtgewicht des Trägeroxids. Besonders bevorzugt sind 8 bis 12 Gew.-%, beispielsweise 9, 10 oder 11 Gew.-%.

In einer Ausführungsform der vorliegenden Erfindung ist das Mangan-haltige Trägeroxid so ausgestaltet, dass die Trägeroxidkomponente A mit Trägeroxidkomponente B dotiert ist.

Ein solches Mangan-haltige Trägeroxid wird beispielsweise dadurch erhalten, dass Trägeroxidkomponente A mit einer entsprechenden Menge eines wasserlöslichen Mangansalzes, beispielsweise Manganacetat, versetzt und dann getrocknet und gegebenenfalls kalziniert wird. Mangan liegt dann auf der Trägeroxidkomponente A in der Regel als Manganoxid, insbesondere als MnOz vor.

Zur Vermeidung von Missverständnissen wird hiermit deutlich gemacht, dass das Mangan-haltige Trägeroxid gemäß vorliegender Erfindung keine physikalische Mischung aus Trägeroxidkomponente A und Trägeroxidkomponente B umfasst.

In Ausführungsformen der vorliegenden Erfindung ist Materialzone A frei von Ceroxid.

In Ausführungsformen der vorliegenden Erfindung ist der erfindungsgemäße Oxidationskatalysator frei von Seltenerdmetallen und Seltenerdmetallverbindungen.

Die im erfindungsgemäßen Oxidationskatalysator enthaltenen Mengen an Palladium und Platin können in weiten Grenzen variieren und hängen von der genauen Funktion ab, die der erfindungsgemäße Oxidationskatalysator erfüllen soll. Der Fachmann kann die erforderlichen Mengen in einfacher Weise bestimmen.

In Ausführungsformen des erfindungsgemäßen Oxidationskatalysators ist das Platin und Palladium in Materialzone A ausschließlich auf dem Mangan-haltigen Trägeroxid geträgert.

In Ausführungsformen des erfindungsgemäßen Oxidationskatalysators ist Materialzone A die alleinige katalytisch aktive Materialzone.

In Ausführungsformen des erfindungsgemäßen Oxidationskatalysators ist Materialzone A die alleinige Materialzone. In diesem Fall besteht der erfindungsgemäße Oxidationskatalysator aus einem Tragkörper mit einer Länge L, die sich zwischen einer ersten Stirnfläche a und einer zweiten Stirnfläche b erstreckt und der auf dem Tragkörper angeordneten katalytisch aktiven Materialzone A

In Ausführungsformen des erfindungsgemäßen Oxidationskatalysators liegt die Materialzone A in Mengen von 50 bis 150 g/l, bezogen auf das Volumen des Tragkörpers, vor.

In Ausführungsformen des erfindungsgemäßen Oxidationskatalysators erstreckt sich die Materialzone A über die gesamte Länge L des Tragkörpers. In Ausführungsformen, in denen der Tragkörper neben Materialzone A noch ein oder mehrere andere katalytisch aktive oder inerte Materialzonen umfasst, kann die Länge der Materialzone A aber auch kürzer als die Länge L sei, also etwa 10 bis 90, 20 bis 70%, 40 bis 60% oder 45 bis 50% der Gesamtlänge L des Tragkörpers. Die Materialzone A kann in diesen Fällen entweder von Stirnfläche a oder von Stirnfläche b ausgehen.

Der erfindungsgemäße Oxidationskatalysator umfasst neben der Materialzone A eine Materialzone B. Dabei liegt die Materialzone B direkt auf dem Tragkörper, insbesondere über dessen gesamte Länge L, und die Materialzone A liegt auf Materialzone B. Materialzone B umfasst Platin, Palladium oder Platin und Palladium, auf einem Trägeroxid ausgewählt aus der Reihe bestehend aus Aluminiumoxid, dotiertes Aluminiumoxid, Siliziumoxid, Titandioxid und Mischoxiden enthaltend eines oder mehrere der genannten Oxide.

Materialzone B umfasst Platin, Palladium oder Platin und Palladium, auf einem Trägeroxid ausgewählt aus der Reihe bestehend aus Aluminiumoxid, dotiertes Aluminiumoxid, Siliziumoxid, Titandioxid und Mischoxiden enthaltend eines oder mehrere der genannten Oxide.

Daneben kann Materialzone B auch Zeolith enthalten, der insbesondere ausgewählt ist aus der Reihe bestehend aus Beta-Zeolith, ZSM-5, Zeolith Y oder Mischungen davon.

Sofern Materialzone B Platin und Palladium enthält, so kann deren Gewichtsverhältnis in weiten Grenzen variieren. Insbesondere ist das Gewichtsverhältnis von Platin zu Palladium Pt : Pd ≥ 1, also beispielsweise 20 : 1 bis 1 : 1. Bevorzugt ist das Verhältnis Pt : Pd 10 : 1 bis 1,5 :1 , beispielsweise 8 : 1, 6 : 1 oder 4 : 1.

Als Tragkörper kommen insbesondere sogenannte Wabenkörper aus Keramik, insbesondere Cordierit, oder aus Metall in Frage. Bevorzugt werden sogenannte Durchflusswabenkörper verwendet. Es sind aber auch Ausführungsformen denkbar, in denen Wandflussfilter als Tragkörper verwendet werden.

Erfindungsgemäße Oxidationskatalysatoren können dadurch hergestellt werden, dass ein geeigneter Tragkörper in an sich bekannter Weise mittels einer Beschichtungssuspension, einem sogenannten Washcoat, beschichtet wird. Zur Herstellung einer Beschichtungssuspension zur Herstellung der Materialzone A wird beispielsweise ein geeignetes, Mangan-haltiges Trägeroxid in Wasser suspendiert. Sodann werden Platin und Palladium unter Rühren in Form von geeigneten, wasserlöslichen Vorläuferverbindungen wie beispielsweise Palladiumnitrat oder Hexahydroxoplatinsäure zur Suspension hinzugegeben und gegebenenfalls durch Stellung des pH-Wertes und/oder durch Zugabe eines Hilfsreagenzes auf dem Trägermaterial fixiert.

Alternativ dazu kann das Edelmetall auch in Analogie zu dem in der EP 1 101 528 A2 beschriebenen Verfahren auf das Trägermaterial appliziert werden.

Die so erhaltenen Suspensionen werden dann vermahlen und nach einem der herkömmlichen Beschichtungsverfahren auf den Tragkörper aufgebracht. Nach der Beschichtung erfolgt die Trocknung des beschichteten Teils im heißen Luftstrom und gegebenenfalls eine Kalzinierung.

Die oben genannten Vorläuferverbindungen und Hilfsreagenzien sind dem Fachmann geläufig.

Liegen neben Materialzone A weitere Materialzonen, etwa Materialzone B, vor, so werden diese in prinzipiell gleicher Weise und in der gewünschten Reihenfolge auf den Tragkörper appliziert.

Die erfindungsgemäßen Dieseloxidationskatalysatoren eignen sich zur Reinigung der Abgase von Dieselmotoren, insbesondere hinsichtlich Kohlenmonoxid und Kohlenwasserstoffen. Sie sind darüber hinaus in der Lage, Stickstoffmonoxid zu Stickstoffdioxid zu oxidieren und so für einen abströmseitigen SCR-Katalysator ein optimales Verhältnis von Stickstoffmonoxid zu Stickstoffdioxid einzustellen.

Die vorliegende Erfindung betrifft somit auch ein Verfahren zur Behandlung von Dieselabgasen, das dadurch gekennzeichnet ist, dass das Dieselabgas über einen Dieseloxidationskatalysator wie oben beschrieben und definiert geleitet wird.

Die erfindungsgemäßen Dieseloxidationskatalysatoren werden insbesondere als Bestandteile von Abgasreinigungssystemen verwendet. Entsprechende Abgasreinigungssysteme umfassen neben einem erfindungsgemäßen Dieseloxidationskatalysator beispielsweise einen Dieselpartikelfilter und/oder einen Katalysator zur selektiven katalytischen Reduktion von Stickoxiden, wobei Dieselpartikelfilter und SCR-Katalysator üblicherweise dem erfindungsgemäßen Dieseloxidationskatalysator nachgeschaltet sind, also abströmseitig angeordnet sind. In einer Ausgestaltung des Abgasreinigungssystems ist der SCR-Katalysator auf dem Dieselpartikelfilter angeordnet.

Die Erfindung wird durch die nachstehenden Beispiele und Figuren erläutert.
- Figur 1a: zeigt das NO₂/NOₓ-Verhältnis des Katalysators C5 und des Vergleichskatalysators CC3 gemessen mittels Abgasmischung III (10% O₂, 250ppm CO, 750ppm NO, 7,5% H₂O, 7% CO₂ und Rest N₂) nach einer Alterung bei 650°C für 16 Stunden.
- Figur 1b: zeigt das NO_{2/}NOₓ-Verhältnis des Katalysators C5 und des Vergleichskatalysators CC3 gemessen mittels Abgasmischung II (6% O₂, 350ppm CO, 270ppm NO, 180ppm C₃H₆, 90ppm C₃H₈, 116ppm H₂, 5% H₂O, 10,7% CO₂ und Rest N₂) nach einer Alterung bei 650°C für 16 Stunden.
- Figur 2a: zeigt das NO_{2/}NOₓ-Verhältnis der Katalysatoren C6 und C7 und des Vergleichskatalysators CC4 gemessen mittels Abgasmischung III (10% O₂, 250ppm CO, 750ppm NO, 7,5% H₂O, 7% CO₂ und Rest N₂) nach einer Alterung bei 650°C für 16 Stunden.
- Figur 2b: zeigt das NO_{2/}NOₓ-Verhältnis der Katalysatoren C6 und C7 und des Vergleichskatalysators CC3 gemessen mittels Abgasmischung II (6% Oz, 350ppm CO, 270ppm NO, 180ppm C₃H₆, 90ppm C₃H₈, 116ppm H₂, 5% H₂O, 10,7% CO₂ und Rest N₂) nach einer Alterung bei 650°C für 16 Stunden.
- Figur 3a: zeigt das NO₂/NOₓ-Verhältnis der Katalysatoren C8 und C9 und des Vergleichskatalysators CC5 gemessen mittels Abgasmischung III (10% O₂, 250ppm CO, 750ppm NO, 7,5% H₂O, 7% CO₂ und Rest N₂) nach einer Alterung bei 650°C für 16 Stunden.
- Figur 3b: zeigt das NO₂/NOₓ-Verhältnis der Katalysatoren C8 und C9 und des Vergleichskatalysators CC5 gemessen mittels Abgasmischung II (6% Oz, 350ppm CO, 270ppm NO, 180ppm C₃H₆, 90ppm C₃H₈, 116ppm H₂, 5% H₂O, 10,7% CO₂ und Rest N₂) nach einer Alterung bei 650°C für 16 Stunden.

### Beispiel 1

Die Beispiele C3 bis C9 entsprechen nicht dem gegenwärtig beanspruchten Gegenstand.
a) Es wurde eine Beschichtungssuspension hergestellt, die 1,36 g/l Platin, 0,91 g/l Palladium, 67,8 g/l eines mit Siliziumdioxid dotierten Aluminiumoxids und 26,0 g/l Beta-Zeolith enthielt, und mittels eines üblichen Verfahrens auf einen handelsüblichen Durchflusswabenkörper aus Cordierit beschichtet.
b) 35 g/l eines mit Lanthanoxid und Manganoxid dotierten Aluminiumoxids mit einer Oberfläche von ca. 160m²/g wurde mit einer wässrigen Lösung enthaltend 1,9 g/l Platin in Form von Tetraamminplatinacetat und 0,32 g/l Palladium in Form von Tetraamminpalladiumacetat so befeuchtet, dass die Poren des Aluminiumoxids gefüllt waren, das Pulver aber rieselfähig blieb. Das Gewichtsverhältnis von Aluminiumoxid, Lanthanoxid und Manganoxid im dotierten Aluminiumoxid war 91:4:5. Zur Fixierung des Edelmetalls wurde das feuchte Pulver acht Stunden bei 120°C getrocknet und 4 Stunden bei 300°C kalziniert. Das erhaltene Pulver wurde dann in Wasser suspendiert und auf eine Partikelgröße von D₉₀ < 20 Mikrometer gemahlen.
c) Die in Schritt b) erhaltene Beschichtungssuspension wurde mittels eines üblichen Verfahrens auf den in Schritt a) erhaltenen Katalysator beschichtet.

Der so erhaltene Katalysator wird nachstehend C1 genannt.

### Beispiel 2

Beispiel 1 wurde wiederholt mit dem Unterschied, dass ein mit Lanthanoxid und Manganoxid dotiertes Aluminiumoxid mit einer Oberfläche von ca. 150m²/g und einem Gewichtsverhältnis von Aluminiumoxid, Lanthanoxid und Manganoxid von 86:4:10 eingesetzt wurde.

Der so erhaltene Katalysator wird nachstehend C2 genannt.

### Vergleichsbeispiel 1

Beispiel 1 wurde wiederholt mit dem Unterschied, dass ein mit Lanthanoxid dotiertes Aluminiumoxid mit einer Oberfläche von ca. 150m²/g und einem Gewichtsverhältnis von Aluminiumoxid und Lanthanoxid von 96:4 eingesetzt wurde.

Der so erhaltene Katalysator wird nachstehend CC1 genannt.

### Beispiel 3

Beispiel 1 wurde wiederholt mit dem Unterschied, dass ein mit Siliziumdioxid und Manganoxid dotiertes Aluminiumoxid mit einer Oberfläche von ca. 180m²/g und einem Gewichtsverhältnis von Aluminiumoxid, Siliziumdioxid und Manganoxid von 90:5:5 eingesetzt wurde.

Der so erhaltene Katalysator wird nachstehend C3 genannt.

### Beispiel 4

Beispiel 1 wurde wiederholt mit dem Unterschied, dass ein mit Siliziumdioxid und Manganoxid dotiertes Aluminiumoxid mit einer Oberfläche von ca. 170m²/g und einem Gewichtsverhältnis von Aluminiumoxid, Siliziumdioxid und Manganoxid von 85:5:10 eingesetzt wurde.

Der so erhaltene Katalysator wird nachstehend C4 genannt.

### Vergleichsbeispiel 2

Beispiel 1 wurde wiederholt mit dem Unterschied, dass ein mit Siliziumdioxid dotiertes Aluminiumoxid mit einer Oberfläche von ca. 150m²/g und einem Gewichtsverhältnis von Aluminiumoxid und Siliziumdioxid 95:5 eingesetzt wurde.

Der so erhaltene Katalysator wird nachstehend CC2 genannt.

### Vergleichsexperimente I

a) Aus den Katalysatoren C1, C2, CC1, C3, C4 und CC2 wurden Kerne entnommen und in einem Ofen 16 Stunden bei 800°C hydrothermal gealtert (10% H₂O, 10% O₂, N₂ Rest).
b) Mittels der entnommenen und gealterten Kerne wurde der CO T₅₀-Wert bestimmt. Dazu wurde in einem Laborreaktor ein künstliches Abgas aus 6% O₂, 350ppm CO, 270ppm NO, 180ppm C₃H₆, 90ppm C₃H₈, 10% H₂O, 10% CO₂ und Rest N₂ (Abgasmischung I) mit 2000 L/h durch die Kerne geleitet und die Temperatur mit 15°C/min von 75°C auf 500°C erhöht. Dabei wurde die Temperatur bestimmt, bei der 50% des Kohlenmonoxids umgesetzt sind.

Die Ergebnisse sind Tabelle 1 zu entnehmen.

| | Gewichtsanteil an MnOz im Trägeroxid | CO T₅₀ [°C] |
|---|---|---|
| C1 | 5 | 125 |
| C2 | 10 | 121 |
| CC1 | 0 | 145 |
| C3 | 5 | 133 |
| C4 | 10 | 135 |
| CC2 | 0 | 141 |

### Beispiel 5

Es wurde eine Beschichtungssuspension hergestellt, die 0,61 g/l Platin, 0,10 g/l Palladium und 105,29 g/l eines mit Siliziumdioxid und Manganoxid dotierten Aluminiumoxids enthielt, und mittels eines üblichen Verfahrens auf einen handelsüblichen Durchflusswabenkörper aus Cordierit beschichtet. Das Gewichtsverhältnis von Aluminiumoxid, Siliziumdioxid und Manganoxid im dotierten Aluminiumoxid war 85:5:10.

Der so erhaltene Katalysator wird nachstehend C5 genannt.

### Vergleichsbeispiel 3

Beispiel 5 wurde wiederholt mit dem Unterschied, dass ein mit Siliziumdioxid dotiertes Aluminiumoxid mit einer Oberfläche von ca. 150 m²/g und einem Gewichtsverhältnis von Aluminiumoxid und Siliziumdioxid 95:5 eingesetzt wurde.

Der so erhaltene Katalysator wird nachstehend CC3 genannt.

### Beispiel 6

Beispiel 5 wurde wiederholt mit dem Unterschied, dass ein mit Lanthanoxid und Manganoxid dotiertes Aluminiumoxid mit einer Oberfläche von ca. 145 m²/g und einem Gewichtsverhältnis von Aluminiumoxid, Lanthanoxid und Manganoxid von 86:4:10 eingesetzt wurde.

Der so erhaltene Katalysator wird nachstehend C6 genannt.

### Beispiel 7

90 g/l eines mit Lanthanoxid dotiertem Aluminiumoxids mit einer Oberfläche von ca. 170 m²/g wurde mit einer wässrigen Lösung enthaltend 10 g/l Manganoxid in Form von Manganacetat-Tetrahydrat so befeuchtet, dass die Poren des Aluminiumoxids gefüllt waren, das Pulver aber rieselfähig blieb. Das Gewichtsverhältnis von Aluminiumoxid, Lanthanoxid und Manganoxid im dotierten Aluminiumoxid war 86,4:3,6:10. Zur Fixierung des Mangans (als Manganoxid) wurde das feuchte Pulver acht Stunden bei 120°C getrocknet und 4 Stunden bei 300°C kalziniert. Das erhaltene Pulver wurde dann in Wasser suspendiert und auf eine Partikelgröße von D90 < 20 Mikrometer gemahlen.

Aus dem so erhaltenen Pulver wurde eine Beschichtungssuspension hergestellt, die 0,61 g/l Platin, 0,10 g/l Palladium und 105,29 g/l des oben genannten Pulvers enthielt, und mittels eines üblichen Verfahrens auf einen handelsüblichen Durchflusswabenkörper aus Cordierit beschichtet.

Der so erhaltene Katalysator wird nachstehend C7 genannt.

### Vergleichsbeispiel 4

Beispiel 5 wurde wiederholt mit dem Unterschied, dass ein mit Lanthanoxid dotiertes Aluminiumoxid mit einer Oberfläche von ca. 190 m²/g und einem Gewichtsverhältnis von Aluminiumoxid und Lanthanoxid 96:4 eingesetzt wurde.

Der so erhaltene Katalysator wird nachstehend CC4 genannt.

### Beispiel 8

95 g/l eines reinen Aluminiumoxids mit einer Oberfläche von ca. 140 m²/g wurde mit einer wässrigen Lösung enthaltend 5 g/l Manganoxid in Form von Manganacetat-Tetrahydrat so befeuchtet, dass die Poren des Aluminiumoxids gefüllt waren, das Pulver aber rieselfähig blieb. Das Gewichtsverhältnis von Aluminiumoxid und Manganoxid im dotierten Aluminiumoxid war 95:5. Zur Fixierung des Mangans (als Manganoxid) wurde das feuchte Pulver acht Stunden bei 120°C getrocknet und 4 Stunden bei 300°C kalziniert. Das erhaltene Pulver wurde dann in Wasser suspendiert und auf eine Partikelgröße von D90 < 20 Mikrometer gemahlen. Aus dem so erhaltenen Pulver wurde eine Beschichtungssuspension hergestellt, die 0,61 g/l Platin, 0,10 g/l Palladium und 105,29 g/l des oben genannten Pulvers enthielt, und mittels eines üblichen Verfahrens auf einen handelsüblichen Durchflusswabenkörper aus Cordierit beschichtet.

Der so erhaltene Katalysator wird nachstehend C8 genannt.

### Beispiel 9

90 g/l eines reinen Aluminiumoxids mit einer Oberfläche von ca. 140 m²/g wurde mit einer wässrigen Lösung enthaltend 10 g/l Manganoxid in Form von Manganacetat-Tetrahydrat so befeuchtet, dass die Poren des Aluminiumoxids gefüllt waren, das Pulver aber rieselfähig blieb. Das Gewichtsverhältnis von Aluminiumoxid und Manganoxid im dotierten Aluminiumoxid war 90:10. Zur Fixierung des Mangans (als Manganoxid) wurde das feuchte Pulver acht Stunden bei 120°C getrocknet und 4 Stunden bei 300°C kalziniert. Das erhaltene Pulver wurde dann in Wasser suspendiert und auf eine Partikelgröße von D90 < 20 Mikrometer gemahlen. Aus dem so erhaltenen Pulver wurde eine Beschichtungssuspension hergestellt, die 0,61 g/l Platin, 0,10 g/l Palladium und 105,29 g/l des oben genannten Pulvers enthielt, und mittels eines üblichen Verfahrens auf einen handelsüblichen Durchflusswabenkörper aus Cordierit beschichtet.

Der so erhaltene Katalysator wird nachstehend C9 genannt.

### Vergleichsbeispiel 5

Beispiel 5 wurde wiederholt mit dem Unterschied, dass ein reines Aluminiumoxid mit einer Oberfläche von ca. 140 m²/g eingesetzt wurde. Der so erhaltene Katalysator wird nachstehend CC5 genannt.

### Vergleichsexperimente II

a) Aus den Katalysatoren C5, CC3, C6, C7, CC4, C8, C9 und CC5 wurden jeweils zwei Kerne entnommen und in einem Ofen 16 Stunden bei 650°C hydrothermal gealtert (10% H₂O, 10% O₂, N₂ Rest).
b) Mittels der entnommenen und gealterten Kerne wurde der CO T₅₀-Wert bestimmt. Dazu wurde in einem Laborreaktor ein künstliches Abgas aus 6% O₂, 350ppm CO, 270ppm NO, 180ppm C₃H₆, 90ppm C₃H₈, 116ppm H₂, 5% HzO, 10,7% CO₂ und Rest N₂ (Abgasmischung II) mit 1930 L/h durch die Kerne geleitet und die Temperatur mit 15°C/min von 75°C auf 500°C erhöht. Dabei wurde die Temperatur bestimmt, bei der 50% des Kohlenmonoxids umgesetzt sind.
c) In einem weiteren Test wurde das Verfahren gemäß b) wiederholt, allerdings mit einem künstliches Abgas aus 10% O₂, 250ppm CO, 750ppm NO, 7,5% H₂O, 7% CO₂ und Rest N₂ (Abgasmischung III).
d) Die Vergleichsexperimente gemäß a) und b) wurde mit 16 Stunden bei 750°C gealterten Kernen wiederholt.
Die Ergebnisse sind den Tabellen 2 bis 5 zu entnehmen.

**Tabelle 2: Alterung 16 h 650°C, Abgasmischung II**

| | Gewichtsanteil an MnOz im Trägeroxid | CO T₅₀ [°C] |
|---|---|---|
| C5 | 10 | 142 |
| CC3 | 0 | 162 |
| C6 | 10 | 155 |
| C7 | 10 | 145 |
| CC4 | 0 | 172 |
| C8 | 5 | 154 |
| C9 | 10 | 150 |
| CC5 | 0 | 180 |

**Tabelle 3: Alterung 16 h 750°C, Abgasmischung II**

| | Gewichtsanteil an MnOz im Trägeroxid | CO T₅₀ [°C] |
|---|---|---|
| C5 | 10 | 151 |
| CC3 | 0 | 168 |
| C6 | 10 | 164 |
| C7 | 10 | 162 |
| CC4 | 0 | 179 |
| C8 | 5 | 150 |
| C9 | 10 | 155 |
| CC5 | 0 | 188 |

**Tabelle 4: Alterung 16 h 650°C, Abgasmischung III**

| | Gewichtsanteil an MnOz im Trägeroxid | CO T₅₀ [°C] |
|---|---|---|
| C5 | 10 | 119 |
| CC3 | 0 | 155 |
| C6 | 10 | 132 |
| C7 | 10 | 122 |
| CC4 | 0 | 153 |
| C8 | 5 | 129 |
| C9 | 10 | 124 |
| CC5 | 0 | 162 |

**Tabelle 5: Alterung 16 h 750°C, Abgasmischung III**

| | Gewichtsanteil an MnOz im Trägeroxid | CO T₅₀ [°C] |
|---|---|---|
| C5 | 10 | 139 |
| CC3 | 0 | 161 |
| C6 | 10 | 136 |
| C7 | 10 | 142 |
| CC4 | 0 | 161 |
| C8 | 5 | 132 |
| C9 | 10 | 127 |
| CC5 | 0 | 165 |

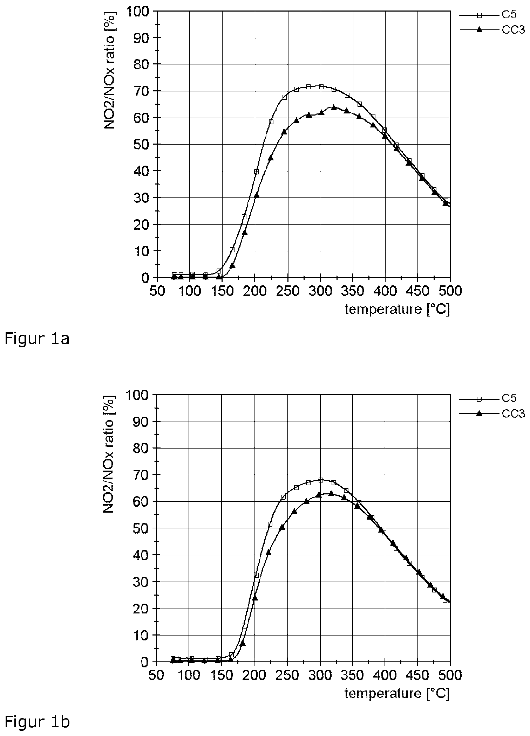

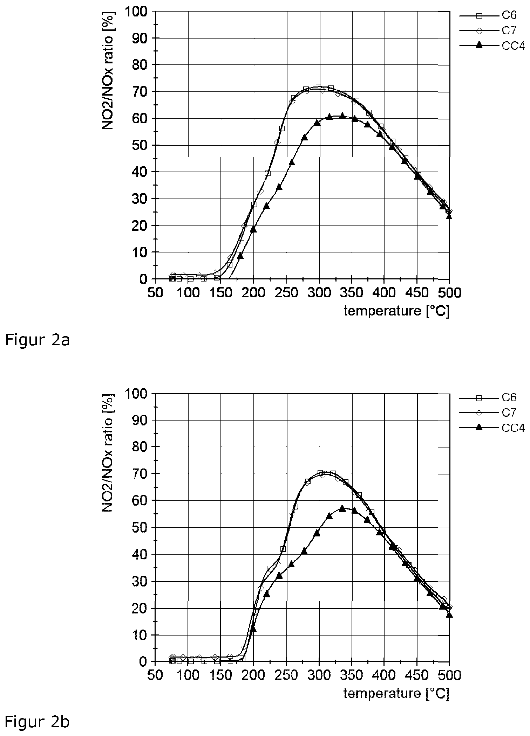

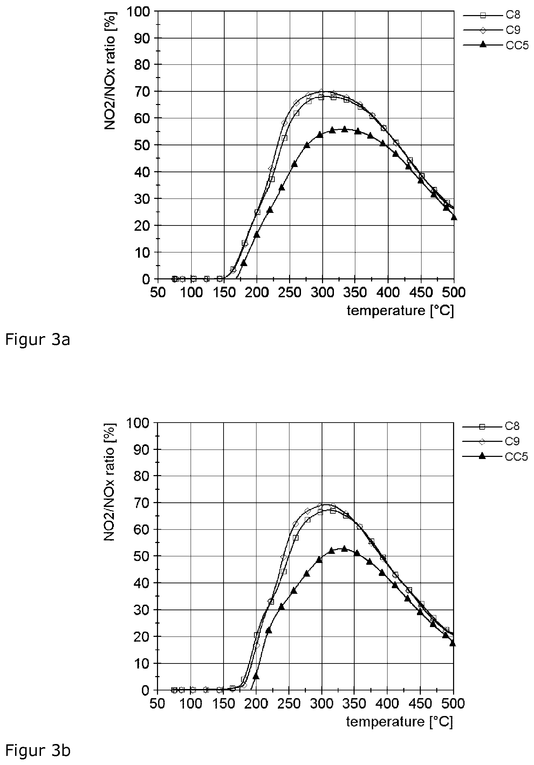

e) Mit den 16 Stunden bei 650°C gealterten Kernen wurde auch das NO_{2/}NO_{X} Verhältnis am Katalysatorausgang gemessen. Die Ergebnisse zeigen Figuren 1a und 1b für die Katalysatoren C5 und CC3, Figuren 2a und 2b für die Katalysatoren C6, C7 und CC4, sowie Figuren 3a und 3b für die Katalysatoren C8, C9 und CC5.

## Patentansprüche

1. Dieseloxidationskatalysator, der einen Tragkörper mit einer Länge L, die sich zwischen einer ersten Stirnfläche a und einer zweiten Stirnfläche b erstreckt und eine auf dem Tragkörper angeordnete katalytisch aktive Materialzone A umfasst, wobei die Materialzone A Palladium und Platin geträgert auf einem Mangan-haltigen Trägeroxid enthält, wobei das Verhältnis von Platin zu Palladium Pt : Pd ≥ 1 ist, und wobei das Mangan-haltige Trägeroxid aus einer Trägeroxidkomponente A und einer Trägeroxid-komponente B besteht und die Trägeroxidkomponente B aus Mangan und/oder einer Manganverbindung besteht und in einer Menge von 5 bis 15 Gew.-%, berechnet als MnO₂ und bezogen auf das Gesamtgewicht des Mangan-haltigen Trägeroxids vorliegt und wobei Materialzone A frei von Zeolithen ist, und wobei die Trägeroxidkomponente A Lanthan-dotiertes Aluminiumoxid ist, wobei Lanthan in Mengen von 1 bis 10 Gew.-%, berechnet als La₂O₃ und bezogen auf das Gewicht des dotierten Aluminiumoxids, verwendet wird,
und wobei der Dieseloxidationskatalysator eine Materialzone B umfasst, **dadurch gekennzeichnet, dass** Materialzone B direkt auf dem Tragkörper und Materialzone A auf Materialzone B liegt, und dass Materialzone B Platin und Palladium auf einem Trägeroxid ausgewählt aus der Reihe bestehend aus Aluminiumoxid, dotiertes Aluminiumoxid, Siliziumoxid, Titandioxid und Mischoxiden enthaltend eines oder mehrere der genannten Oxide enthält.

2. Dieseloxidationskatalysator gemäß Anspruch 1, **dadurch gekennzeichnet, dass** die Trägeroxidkomponente B in einer Menge von 8 bis 12 Gew.-%, berechnet als MnO₂ und bezogen auf das Gesamtgewicht des Mangan-haltigen Trägeroxids vorliegt.

3. Dieseloxidationskatalysator gemäß Anspruch 1 und/oder 2, **dadurch gekennzeichnet, dass** das Platin und Palladium in Materialzone A ausschließlich auf dem Mangan-haltigen Trägeroxid geträgert ist.

4. Dieseloxidationskatalysator gemäß einem oder mehreren der Ansprüche 1 bis 3, **dadurch gekennzeichnet, dass** Materialzone B Zeolith, ausgewählt aus der Reihe bestehend aus Beta-Zeolith, ZSM-5, Zeolith Y oder Mischungen davon, enthält.

5. Verfahren zur Behandlung von Dieselabgasen, **dadurch gekennzeichnet, dass** das Dieselabgas über einen Dieseloxidations-katalysator gemäß einem oder mehreren der Ansprüche 1 bis 4 geleitet wird.

6. Vorrichtung zur Reinigung der Abgase von Dieselmotoren, die einen Dieseloxidationskatalysator nach einem der Ansprüche 1 bis 4 aufweist.

## Claims

1. Diesel oxidation catalyst comprising a carrier body having a length L extending between a first front surface a and a second front surface b and comprising a catalytically active material zone A arranged on the carrier body, wherein the material zone A contains palladium and platinum supported on a manganese-containing carrier oxide, wherein the ratio of platinum to palladium Pt: Pd ≥ 1, and wherein the manganese-containing carrier oxide consists of a carrier oxide component A and a carrier oxide component B, and the carrier oxide component B consists of manganese and/or a manganese compound and is present in an amount of 5 to 15 wt.-%, calculated as MnO₂ and based on the total weight of the manganese-containing carrier oxide, and wherein material zone A is free of zeolites, and wherein the carrier oxide component A is lanthanum-doped aluminum oxide, wherein lanthanum is used in amounts of 1 to 10 wt.%, calculated as La₂O₃ and based on the weight of the doped aluminum oxide,
and wherein the diesel oxidation catalyst comprises a material zone B, **characterized in that** material zone B lies directly on the carrier body and material zone A lies on material zone B, and **in that** material zone B contains platinum and palladium on a carrier oxide selected from the series consisting of aluminum oxide, doped aluminum oxide, silicon oxide, titanium dioxide, and mixed oxides containing one or more of the aforementioned oxides.

2. Diesel oxidation catalyst according to claim 1, **characterized in that** the carrier oxide component B is present in an amount of 8 to 12 wt%, calculated as MnO₂ and based on the total weight of the manganese-containing carrier oxide.

3. Diesel oxidation catalyst according to claim 1 and/or 2, **characterized in that** the platinum and palladium in material zone A are supported exclusively on the manganese-containing carrier oxide.

4. Diesel oxidation catalyst according to one or more of claims 1 to 3, **characterized in that** material zone B contains zeolite selected from the series consisting of beta zeolite, ZSM-5, zeolite Y, or mixtures thereof.

5. Method for treating diesel exhaust gases, **characterized in that** the diesel exhaust gas is passed over a diesel oxidation catalyst according to one or more of claims 1 to 4.

6. Device for cleaning exhaust gases from diesel engines, comprising a diesel oxidation catalyst according to one of claims 1 to 4.

## Revendications

1. Catalyseur d'oxydation diesel comprenant un corps de support ayant une longueur L s'étendant entre une première surface frontale a et une deuxième surface frontale b et comprenant une zone de matériau A catalytiquement actif agencée sur le corps de support, dans lequel la zone de matériau A contient du palladium et du platine supportés sur un oxyde support contenant du manganèse, dans lequel le rapport entre le platine et le palladium Pt:Pd ≥ 1, et dans lequel l'oxyde support contenant du manganèse est constitué d'un composant d'oxyde support A et d'un composant d'oxyde support B, et le composant d'oxyde support B est constitué de manganèse et/ou d'un composé de manganèse et est présent en une quantité de 5 à 15 % en poids, calculée en tant que MnO₂ et sur la base du poids total de l'oxyde support contenant du manganèse, et dans lequel la zone de matériau A est exempte de zéolites, et dans lequel le composant d'oxyde support A est un oxyde d'aluminium dopé au lanthane, dans lequel le lanthane est utilisé dans des quantités de 1 à 10 % en poids, calculées en tant que La₂O₃ et sur la base du poids de l'oxyde d'aluminium dopé,
et dans lequel le catalyseur d'oxydation diesel comprend une zone de matériau B, **caractérisé en ce que** la zone de matériau B repose directement sur le corps de support et la zone de matériau A repose sur la zone de matériau B, et **en ce que** la zone de matériau B contient du platine et du palladium sur un oxyde support choisi dans la série constituée par l'oxyde d'aluminium, l'oxyde d'aluminium dopé, l'oxyde de silicium, le dioxyde de titane et des oxydes mixtes contenant un ou plusieurs des oxydes susmentionnés.

2. Catalyseur d'oxydation diesel selon la revendication 1, **caractérisé en ce que** le composant d'oxyde support B est présent en une quantité de 8 à 12 % en poids, calculée en tant que MnO₂, et sur la base du poids total de l'oxyde support contenant du manganèse.

3. Catalyseur d'oxydation diesel selon la revendication 1 et/ou 2, **caractérisé en ce que** le platine et le palladium dans la zone de matériau A sont supportés exclusivement sur l'oxyde support contenant du manganèse.

4. Catalyseur d'oxydation diesel selon une ou plusieurs des revendications 1 à 3, **caractérisé en ce que** la zone de matériau B contient une zéolite choisie dans la série constituée par la zéolite bêta, la ZSM-5, la zéolite Y ou des mélanges de celles-ci.

5. Procédé de traitement de gaz d'échappement diesel, **caractérisé en ce que** les gaz d'échappement diesel sont passés sur un catalyseur d'oxydation diesel selon une ou plusieurs des revendications 1 à 4.

6. Dispositif d'épuration des gaz d'échappement de moteurs diesel, comprenant un catalyseur d'oxydation diesel selon une des revendications 1 à 4.
